# EUROPÄISCHE PATENTANMELDUNG

(11) **EP 2 481 959 A1**
(43) Veröffentlichungstag der Anmeldung: **01.08.2012**
(21) Anmeldenummer: 11000648.3
(22) Anmeldetag: 27.01.2011
(51) Int. Cl.: F16J 15/32

(54) **Dichtring**

(71) Anmelder: Carl Freudenberg KG, 69469 Weinheim (DE)
(72) Erfinder: Tzekos, Stavros, 21217 Seevetal (DE); Werther, Hans, 21220 Seevetal-Ramelsloh (DE); Wüstenhagen, Guido, Dr., 21077 Hamburg (DE); Günther, Hans-Werner, 31623 Drakenburg (DE)

(57) **Zusammenfassung**

Dichtring, umfassend zumindest eine Dichtlippe (1) und ein mit der Dichtlippe (1) verbundenes Haftteil (2) zur Befestigung des Dichtrings in einer Ausnehmung eines Gehäuses. Das Haftteil (2) besteht aus einem nicht-metallischen, elastisch nachgiebigen Werkstoff und umfasst einen flexiblen Spannring (3), zur radialen Aufweitung des Haftteils (2).

## Beschreibung

### Technisches Gebiet

Die Erfindung betrifft einen Dichtring, umfassend zumindest eine Dichtlippe und ein mit der Dichtlippe verbundenes Haftteil zur Befestigung des Dichtrings in einer Ausnehmung eines Gehäuses.

### Stand der Technik

Derartige Dichtringe sind allgemein bekannt. Das Haftteil ist vorgesehen, um den Dichtring in axial offenen Einbauräumen gegen Verdrehen oder Herausrutschen zu sichern, wobei innerhalb des abzudichtenden Raums Atmosphärendruck oder ein relativer Überdruck herrschen kann.

Vorbekannte Haftteile bestehen zum Beispiel aus einem in sich geschlossenen Metallring, und die Dichtringe sind mittels dieses Metallrings in die Ausnehmung des Gehäuses verliersicher und drehfest eingepresst.

Dabei ist jedoch nachteilig, dass der Metallring und der Einbauraum für den Dichtring hinsichtlich ihrer Abmessungen genau auf einander abgestimmt sein müssen, wobei die Abmessungen des Metallrings und des Einbauraums jeweils relativ eng toleriert sind, um eine verliersichere und drehfeste Festlegung des Dichtrings innerhalb der Ausnehmung des Gehäuses zu gewährleisten. Durch die engen Toleranzen sind die Montage- und Demontagekräfte, die aufgebracht werden müssen, um den Dichtring in die Ausnehmung einzupressen oder herauszuziehen, sehr hoch, so dass sich die Montage des Dichtrings in das Gehäuse und die Demontage aus dem Gehäuse heraus aufwendig gestaltet. Außerdem bedingen die engen Toleranzen hohe Herstellungskosten des Dichtrings.

### Darstellung der Erfindung

Der Erfindung liegt die Aufgabe zugrunde, einen Dichtring der eingangs genannten Art derart weiterzuentwickeln, dass die Montage des Dichtrings in seinen Einbauraum und die Demontage des Dichtrings aus dem Einbauraum heraus vereinfacht wird, dass der Dichtring weiter toleriert sein kann, um in fertigungstechnischer und wirtschaftlicher Hinsicht einfach und kostengünstig hergestellt werden zu können und dass der Dichtring trotzdem während seiner gesamten Gebrauchsdauer verliersicher und drehfest innerhalb seines Einbauraums gehalten wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass das Haftteil aus einem nicht-metallischen, elastisch nachgiebigen Werkstoff besteht und einen flexiblen Spannring umfasst, zur radialen Aufweitung des Haftteils. Hierbei ist von Vorteil, dass das Haftteil selbst, zum Beispiel im Vergleich zu einem Metallring, eine große elastische Nachgiebigkeit in radialer Richtung aufweist, sodass fertigungstechnisch bedingte Toleranzen des Dichtrings und/oder des Gehäuses, das den Einbauraum für den Dichtring begrenzt, problemlos ausgeglichen werden können. Dadurch ist eine Dichtungsanordnung, die den Dichtring und das Gehäuse, in dem der Dichtring angeordnet ist, umfasst, in fertigungstechnischer Hinsicht einfach und in wirtschaftlicher Hinsicht kostengünstig herstellbar.

Der flexible Spannring verspannt das Haftteil dichtend im Einbauraum, in dem der Dichtring angeordnet ist. Der Spannring hält das Haftteil unter radialer Vorspannung gegen die entsprechende, den Einbauraum begrenzende Wandung des Gehäuses gedrückt, so dass der Dichtring verliersicher und drehfest im Einbauraum angeordnet ist.

Die Funktion des Spannrings beruht darauf, dass er durch seine Flexibilität in Querrichtung rein elastisch und nahezu kraftfrei verformt werden kann und sich im montierten Zustand demgegenüber durch die Umfangsdruckspannung versteift. Nach der Montage verhält sich der Spannring im ringförmigen montierten Zustand wie ein in sich geschlossener Metallring. Durch die Umfangsdruckspannung, die der montierte Spannring auf das Haftteil ausübt, werden die erforderliche Haltekraft und daraus resultierend auch die erforderliche Abdichtung des Haftteils im Einbauraum erreicht,

Zur Demontage des Dichtrings werden das elastisch nachgiebige Haftteil und der flexible Spannring in Querrichtung, zum Beispiel nierenförmig verformt.

Das Haftteil kann aus einem elastomeren Werkstoff bestehen. Bevorzugt ist das Haftteil einstückig und materialeinheitlich mit der Dichtlippe ausgebildet. Elastomere Werkstoffe, die für Dichtungszwecke gut geeignet sind, sind für viele Anwendungen In unterschiedlichen Spezifikationen problemlos erhältlich. Durch die einstückige Ausgestaltung von Haftteil und Dichtlippe ist die Herstellung des Dichtrings weiter vereinfacht.

Demgegenüber kann es auch zweckmäßig sein, wenn das Haftteil aus einem von der Dichtlippe abweichenden elastomeren Werkstoff besteht. Eine solche Ausgestaltung ist von Vorteil, wenn das Haftteil und die Dichtlippe unabhängig voneinander an die jeweiligen Gegebenheiten des Anwendungsfalles angepasst werden sollen.

Das Haftteil kann einen im Wesentlichen rechteckigen Querschnitt aufweisen. Das Haftteil bildet die statische Dichtung im Einbauraum des Dichtrings, und durch den im Wesentlichen rechteckigen Querschnitt liegt das Haftteil außen umfangsseitig über eine vergleichsweise große axiale Länge an der die Einbaunut begrenzenden Wandung des Gehäuses an. Dadurch wird einerseits eine gute Abdichtung sichergestellt und andererseits die drehfeste und verliersiche Festlegung des Dichtrings im Einbauraum.

Nach einer ersten Ausgestaltung kann das Haftteil den Spannring vollständig umschließen. Hierbei ist von Vorteil, dass der Spannring vor nachteiligen äußeren Einflüssen gut geschützt ist. Die Gebrauchseigenschaften des geschützten Spannrings bleiben dadurch während der gesamten Gebrauchsdauer des Dichtrings unverändert erhalten.

Nach einer anderen Ausgestaltung kann das Haftteil radial innenseitig eine radial nach innen offene Nut zur Aufnahme des Spannrings aufweisen. Dadurch besteht die Möglichkeit, den Spannring hinsichtlich Material und Geometrie besser an den jeweiligen Anwendungsfall anpassen zu können. Es entsteht dadurch eine Art Baukastensystem, wobei Spannringe mit unterschiedlichen Gebrauchseigenschaften mit unterschiedlichen oder gleichen Dichtringen kombiniert werden können.

Der Spannring kann durch eine Spiralfeder gebildet sein. Die Spiralfeder kann aus einem metallischen Werkstoff bestehen. Spiralfedern sind Maschinenelemente, die in unterschiedlichsten Abmessungen unterschiedlichste Gebrauchseigenschaften aufweisen können und auch in großen Stückzahlen kostengünstig verfügbar sind. Wird der Spannring, wie zuvor beschrieben, vom Haftteil vollständig umschlossen, wäre eine aus einem metallischen Werkstoff bestehende Spiralfeder gut vor Feuchtigkeit und damit vor Korrosion geschützt.

Davon abweichend kann der Spannring durch einen Ring gebildet sein. Der Ring kann aus einem metallischen Werkstoff bestehen, der eine größere Härte aufweist, als das Haftteil. Die größere Härte des als Spannring ausgebildeten Rings ist deshalb erforderlich, weil der Spannring für die radiale Aufweitung des Haftteils sorgen muss.

Der Ring kann durch ein Stahlseil gebildet sein.

### Kurzbeschreibung der Zeichnung

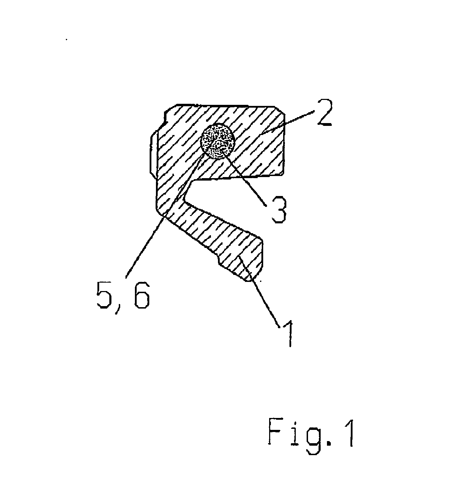

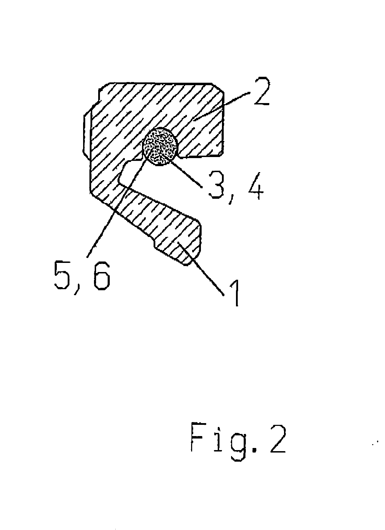

Zwei Ausführungsbeispiele des erfindungsgemäßen Dichtrings werden nachfolgend anhand der Figuren 1 und 2 näher erläutert. Diese zeigen jeweils in schematischer Darstellung:
- Figur 1: ein erstes Ausführungsbeispiel des erfindungsgemäßen Dichtrings, bei dem das Haftteil den Spannring vollständig umschließt.
- Figur 2: ein zweites Ausführungsbeispiel, bei dem das Haftteil radial innenseitig eine radial nach innen offene Nut zur Aufnahme des Spannrings aufweist.

### Ausführung der Erfindung

In den Fig. 1 und 2 ist jeweils ein Dichtring gezeigt, der eine Dichtlippe 1 und ein Haftteil 2 aufweist, die einstückig in einander übergehend und materialleinheitlich ausgebildet sind. Der Dichtring besteht aus einem elastomeren Werkstoff.

Die Dichtlippe 1 ist dynamisch beansprucht und dichtet zum Beispiel Oberflächen von abzudichtenden Wellen ab.

Das Haftteil 2 hat einen im Wesentlichen rechteckigen Querschnitt und sorgt zusammen mit dem flexiblen Spannring 3, der das Haftteil 2 in radialer Richtung nach außen aufweitet, dafür, dass der Dichtring in seinem Einbauraum gegen Verdrehen oder Herausrutschen gesichert ist.

Der flexible Spannring 3 ist in den Fig, 1 und 2 nur schematisch dargestellt und kann beispielsweise als metallische Spiralfeder 5 oder als Ring 6 aus einem metallischen Werkstoff ausgebildet sein. Der Ring 6 ist im hier gezeigten Ausführungsbeispiel als Stahlseil ausgebildet.

In Fig. 1 ist ein erstes Ausführungsbeispiel gezeigt, bei dem das Haftteil 2 den Spannring 3 vollständig umschließt und dadurch vor nachteiligen äußeren Einflüssen schützt.

In Fig. 2 ist ein zweites Ausführungsbeispiel gezeigt, bei dem der Spannring 3 in einer radial nach innen offenen Nut 4 des Haftteils 2 angeordnet ist.

Für die verliersichere und drehfeste Positionierung des Dichtrings innerhalb des Einbauraums ist der flexible Spannring 3 von entscheidender Wichtigkeit. In Querrichtung kann der Spannring 3 elastisch verformt werden.

Ist der Spannring 3 demgegenüber mit den Dichtring im Einbauraum montiert, bringt er durch die Umfangsdruckspannung die erforderliche Anpresskraft radial nach außen auf das Haftteil 2 auf, um das Haftteil 2 radial aufzuweiten und dichtend und drehfest im Einbauraum zu positionieren.

### Bezugszeichenliste:

- 1: Dichtlippe
- 2: Haftteil
- 3: Spannring
- 4: Nut
- 5: Spiralfeder
- 6: Ring

## Patentansprüche

1. Dichtring, umfassend zumindest eine Dichtlippe (1) und ein mit der Dichtlippe (1) verbundenes Haftteil (2) zur Befestigung des Dichtrings in einer Ausnehmung eines Gehäuses, **dadurch gekennzeichnet, dass** das Haftteil (2) aus einem nicht-metallischen, elastisch nachgiebigen Werkstoff besteht und einen flexiblen Spannring (3) umfasst, zur radialen Aufweitung des Haftteils (2).

2. Dichtring nach Anspruch 1, **dadurch gekennzeichnet, dass** das Haftteil (2) aus einem elastomeren Werkstoff besteht.

3. Dichtring nach einem der Ansprüche 1 oder 2, **dadurch gekennzeichnet, dass** das Haftteil (2) einen im Wesentlichen rechteckigen Querschnitt aufweist.

4. Dichtring nach einem der Ansprüche 1 bis 3, **dadurch gekennzeichnet, dass** das Haftteil (2) den Spannring (3) vollständig umschließt.

5. Dichtring nach einem der Ansprüche 1 bis 4, **dadurch gekennzeichnet, dass** das Haftteil (2) radial innenseitig eine radial nach innen offene Nut (4) zur Aufnahme des Spannrings (3) aufweist.

6. Dichtring nach einem der Ansprüche 1 bis 5, **dadurch gekennzeichnet, dass** der Spannring (3) durch eine Spiralfeder (5) gebildet ist.

7. Dichtring nach Anspruch 6, **dadurch gekennzeichnet, dass** die Spiralfeder (5) aus einem metallischen Werkstoff besteht.

8. Dichtring nach einem der Ansprüche 1 bis 5, **dadurch gekennzeichnet, dass** der Spannring (3) durch einen Ring (6) gebildet ist.

9. Dichtring nach Anspruch 8, **dadurch gekennzeichnet, dass** der Ring (6) aus einem metallischen Werkstoff besteht, der eine größere Härte aufweist, als das Haftteil (2).

10. Dichtring nach einem der Ansprüche 8 oder 9, **dadurch gekennzeichnet, dass** der Ring (6) durch ein Stahlseil gebildet ist.
